(19) Europäisches Patentamt
European Patent Office
Office européen des brevets

(11) **EP 1 814 351 A2**

# (12) EUROPEAN PATENT APPLICATION

(43) Date of publication:
**01.08.2007 Bulletin 2007/31**

(51) Int Cl.:
***H04Q 7/38*** (2006.01)

(21) Application number: **07101118.3**

(22) Date of filing: **24.01.2007**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **25.01.2006 US 339024**<br><br>(71) Applicant: **Honeywell International Inc.**<br>**Morristown, New Jersey 07962 (US)** | (72) Inventors:<br>• **Freebersyser, James A.**<br>**Chanhassen, 55317 (US)**<br>• **Yi, Yunjung**<br>**Plymouth, MN 55442 (US)**<br>• **Tang, Choon Y**<br>**Fridley, 55432 (US)**<br><br>(74) Representative: **Haley, Stephen**<br>**Gill Jennings & Every LLP**<br>**Broadgate House**<br>**7 Eldon Street**<br>**London EC2M 7LH (GB)** |

(54) **Media access control protocol for mobile ad hoc networks using CDMA and multiuser detection**

(57) A method for transferring wireless communication data within an arbitrary network topology is provided. The method involves providing a channel access mechanism for a secure exchange of information between at least one first node and at least one second node over a single wideband channel and determining the requirements for transmitting one or more data packets from the at least one first node to the at least one second node over the single wideband channel. The method also involves transmitting the one or more data packets from the at least one first node to the at least one second node over the single wideband channel.

Fig. 1

EP 1 814 351 A2

**Description**

Typical mobile ad hoc networks (MANETs) are composed of two or more nodes adapted to communicate with each other over a broadcast medium. These networks use frequency, time or code division multiplexing to ensure that multiple nodes can share the broadcast medium for packet transmission and reception. Typically, the multiple nodes are configured to operate in a half-duplex mode, i.e., to selectively switch between transmit and receive modes.

With a constant transmission power, signals from transmitter nodes closer to a receiver node are received at a higher power level than signals from transmitter nodes farther away. As a result, the weaker transmission signals are not successfully decoded by the receiver node. This problem, known as the near/far problem, is solved in traditional cellular code-division multiple-access (CDMA) networks by incorporating a base station in each cell and one or more feedback channels. In this manner, the traditional cellular CDMA network is capable of handling simultaneous transmissions within the same network. The base station in each cell acts as a central node for the mobile users in the cell, and communicates with the mobile users using the one or more feedback channels. The one or more feedback channels notify the mobile users of a level of transmission power to use so that all messages are received properly. However, the one or more feedback channels have relatively narrow bandwidth, making any wireless communications in the traditional cellular CDMA network vulnerable to jamming or detection by an unwanted party. For this reason, closed loop power control using narrow-band feedback channels is not conducive to military applications, where the secure transmission of information is of utmost importance.

Current military applications, including Future Combat Systems (FCS) and emergency Systems, are requiring a highly-mobile, arbitrary means of communications. By definition, a MANET is a self-configuring network of mobile routers (and associated hosts) connected by wireless links, it does not require the use of base stations for successful communications. However, since the mobile routers are free to move and organize themselves arbitrarily, situations occur where multiple simultaneous transmissions are received in an unscheduled manner.

The problem of receiving multiple simultaneous transmissions causes power saturation. Power saturation is not a unique problem to MANETs. The base stations used in traditional cellular CDMA networks provide greater receiver amplification to accommodate additional transmissions and eliminate any noticeable saturation problems. In MANETs, less power is available for a receiver amplifier. Furthermore, traditional cellular CDMA networks allow only a scheduled number of users to transfer messages at one particular time to prevent any foreseeable power saturation problems. The arbitrary nature and dynamic traffic patterns of MANETs are not easily suited for this.

For the reasons stated above and for other reasons stated below which become apparent to those skilled in the art upon reading and understanding the specification, there is a need in the art for an improved method for transferring wireless communication data within an arbitrary network topology.

The above-mentioned problems of current methods for transferring wireless communication data are addressed by embodiments of the present invention and will be understood by reading and studying the following specification.

In one embodiment, a method for transferring wireless communication data within an arbitrary network topology is provided. The method involves providing a channel access mechanism for a secure exchange of information between at least one first node and at least one second node over a single wideband channel and determining the requirements for transmitting one or more data packets from the at least one first node to the at least one second node over the single wideband channel. The method also involves transmitting the one or more data packets from the at least one first node to the at least one second node over the single wideband channel.

In another embodiment, a framework for wireless network applications is provided. The framework includes a physical layer responsive to one or more operations from one or more wireless network applications and a data link layer responsive to one or more operations from one or both of the one or more wireless network applications and the physical layer, the data link layer further having a channel access mechanism within a media access control sub-layer. The framework also includes a network layer responsive to one or more function calls from one or more of the data link layer, the one or more wireless network applications and the physical layer, wherein the channel access mechanism in the data link layer is adapted to provide random and contention-free access that allows secure communication transmissions while coping with multiaccess interference and receiver saturation within a single wideband channel.

In yet another embodiment, a communications system is provided. The system includes a dynamic set of nodes. Each of the dynamic set of nodes communicates with at least one other node over a wireless communications medium. The dynamic set of nodes are further adapted to provide both random and contention-free access that allows secure communication transmissions while coping with multiaccess interference and receiver saturation within a single wideband channel.

In the Drawings :

Figure 1 is an illustration of an embodiment of a MANET with a MAC protocol in accordance with the present invention;

Figure 2 is a block diagram of an embodiment of a framework for network applications incorporating a MAC protocol for a MANET in accordance with the present invention;

Figure 3 is a block diagram illustrating an embodiment of an architecture for a channel access mechanism implemented as a MAC protocol in accordance with the present invention,

Figure 4 is a block diagram illustrating an embodiment of a control slot structure within a frame transmitted as part of a data packet in a MANET with a MAC protocol in accordance with the present invention;

Figure 5 is an illustration of an embodiment of power and admission control within a MANET with a MAC protocol in accordance with the present invention;

Figure 6 is an illustration of an embodiment of a combat support system incorporating a MANET with a MAC protocol in accordance with the present invention, and

Figure 7 is a flow diagram of an embodiment of a method of communicating in a MANET using time-division CDMA and multiuser detection in accordance with the present invention.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical, and electrical changes may be made without departing from the spirit and scope of the present invention. The following detailed description is, therefore, not to be taken in a limiting sense.

Embodiments of the present invention address problems with transferring wireless communication data within an arbitrary network topology and will be understood by reading and studying the following specification. Particularly, in one embodiment, a method for transferring wireless communication data within an arbitrary network topology is provided. The method involves providing a channel access mechanism for a secure exchange of information between at least one first node and at least one second node over a single wideband channel and determining the requirements for transmitting one or more data packets from the at least one first node to the at least one second node over the single wideband channel. The method also involves transmitting the one or more data packets from the at least one first node to the at least one second node over the single wideband channel.

Embodiments of the present invention may be implemented with present wireless communications network technology, This description is presented with enough detail to provide an understanding of the present invention, and should not be construed to encompass all necessary elements in a wireless communications network. Embodiments of the present invention are applicable to any wireless communications network that requires secure data transmissions within an arbitrary network configuration. Alternate embodiments of the present invention to those described below utilize network topologies that are capable of providing both random and contention-free access that allow multiple simultaneous communication transmissions to occur while coping with multiaccess interference and receiver saturation.

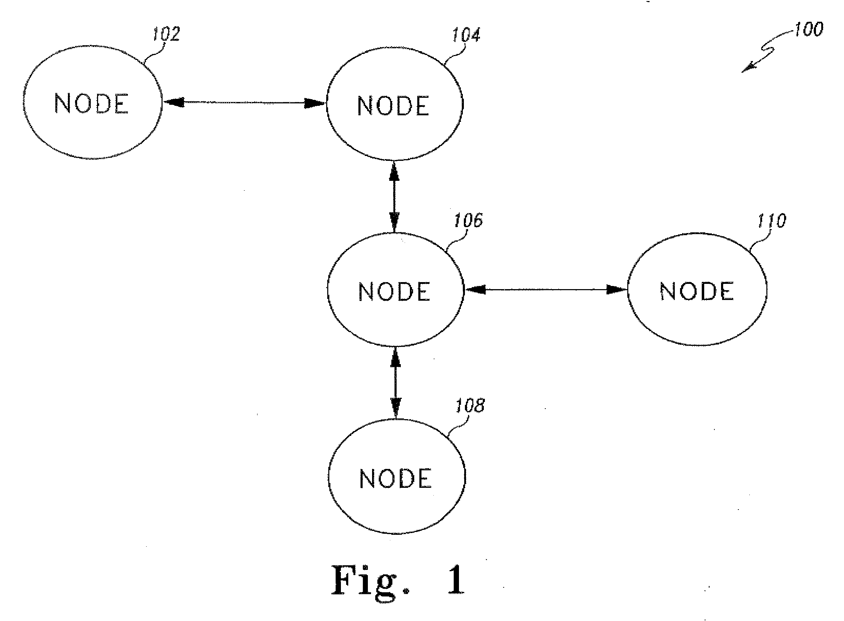

Figure 1 is an illustration of an embodiment of a MANET, indicated generally at 100, with a MAC protocol according to the teachings of the present invention, Network 100 is a MANET that includes a dynamic set of nodes and does not require a dedicated base station or central node. Over time, various nodes join and leave the network. Figure 1 shows the state of network 100 at a particular point in time. In one embodiment, network 100 exhibits a communication pattern in which high-speed, real-time data streams flow between nodes 102, 104, 106, 108, and 110 over a wireless communications medium. Moreover, messages consisting of one or more packets are transmitted between all nodes 102, 104, 106,108, and 110. In one embodiment, such streams are shown as flowing directly (that is, with a single hop) from nodes 108 and 110 to node 106. Another node 102 is outside of the transmission range of node 106. Therefore, communication between node 102 and node 106 is routed through node 104. Node 104 is within the transmission range of node 106. Node 104 routes such transmissions received from node 102 onto node 106 and routes transmissions received from node 106 onto node 102. In other words, such transmissions are considered a multihop transmission.

One particular configuration of nodes is shown in Figure 1. It is to be understood that in other embodiments there will be different arrangements of nodes, and that transmissions between the nodes are expected to include one or more hops.

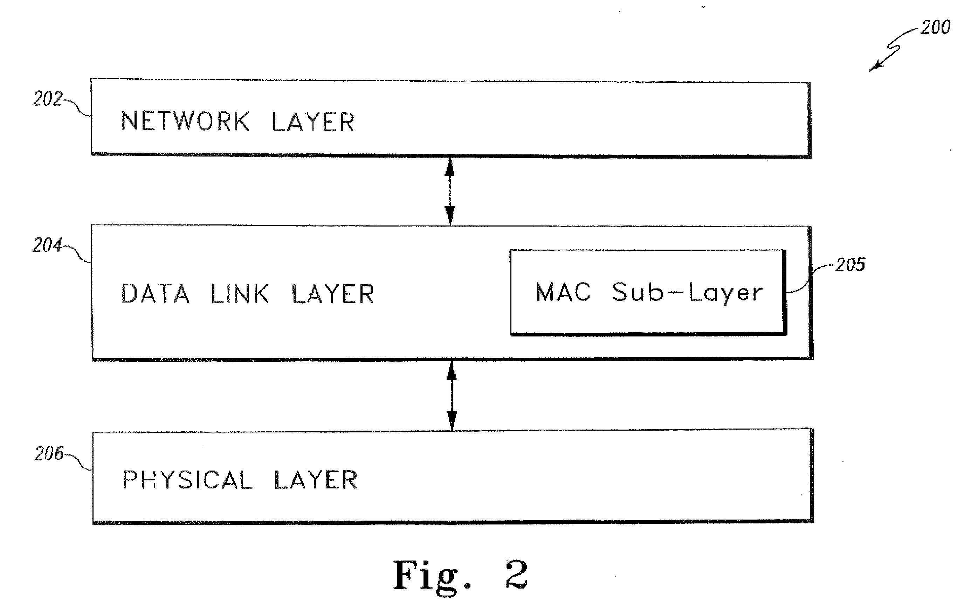

Figure 2 is a block diagram of an embodiment of a framework for network applications, indicated generally at 200. incorporating a MAC protocol for a MANET according to the teachings of the present invention. Framework 200 comprise multiple layers, discussed below, that each provide hardware-related service to enable each node of network 100 to function as shown above with respect to Figure 1. In one embodiment, framework 200 comprises a network layer 202, a data link layer 204, and a physical layer 206. Each layer of framework 200 compartmentalizes key functions required for any node of network 100 to communicate with any other node of network 100.

In one embodiment, physical layer 206 is communicatively coupled to, and provides low level functional support to, data link layer 204 and network layer 202. Physical layer 206 provides the hardware means of sending and receiving data. Data link layer 204 provides error handling for physical layer 206, along with flow control and frame synchronization. Moreover, data link layer 204 further includes a MAC sub-layer 205. In one embodiment, MAC sub-layer 205 is concerned with (1) recognizing where one or more frames begin and end when receiving one or more data packets from physical layer 206, (2) delimiting the one or more frames when sending the one or more data packets from physical layer 206 so that one or more receiver nodes are able to determine the size of the one or more data packets, (3) inserting transmitter and receiver node IDs into each of one or more transmitted packets, (4) filtering out one or more packets intended for a particular node by verifying the destination address in one or more received packets, and (5) control of access within a wireless communications network, i.e., which of one or more transmitter nodes in the MANET have a right to transmit.

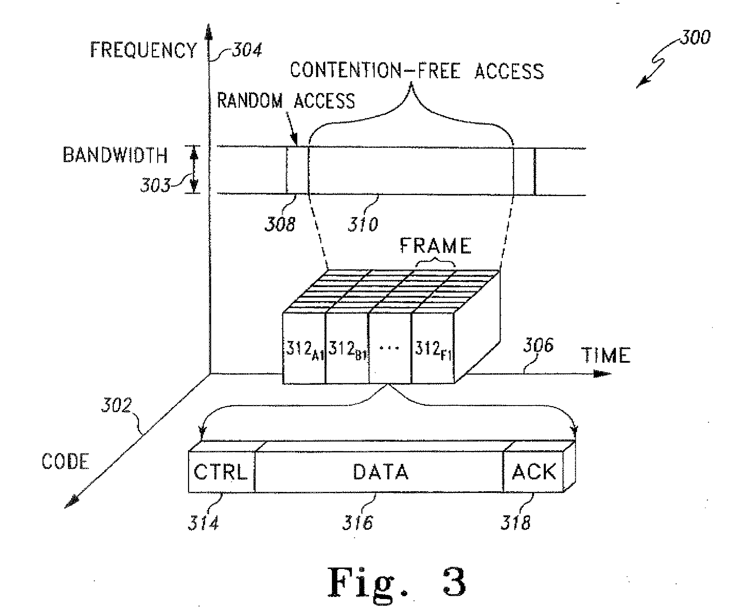

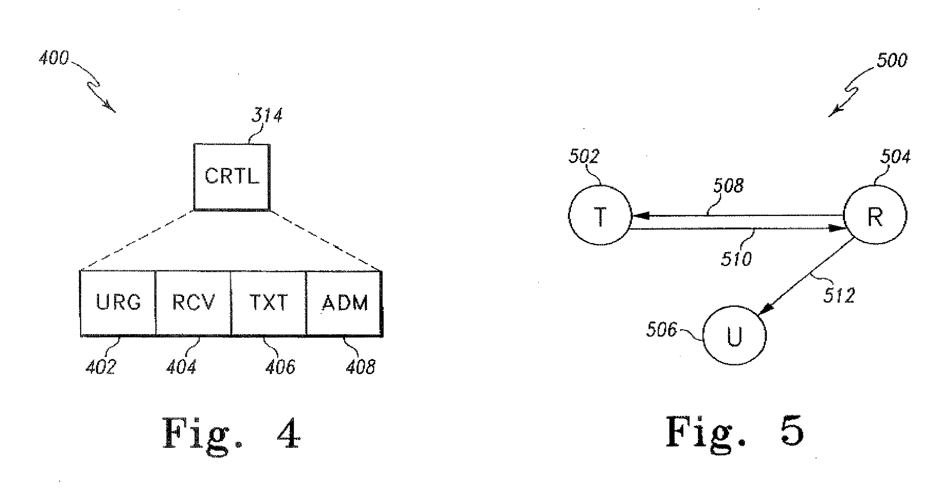

Additional detail pertaining to access control, and a channel access mechanism for MAC sub-layer 205 in particular, is further described with respect to Figures 3 and 4 below, Network layer 202 provides switching and routing capabilities within the MANET for transmitting data between the nodes of the MANET, similar to network 100 of Figure 1. The improved network layer routing and related mobile networking services found within framework 200, including MAC sub-layer 205, help to preserve the integrity of MANETs within a more dynamic environment.

Figure 3 is a block diagram illustrating an embodiment of architecture for a channel access mechanism, indicated generally at 300, implemented as a MAC protocol according to the teachings of the present invention. In one embodiment, the channel access mechanism used in architecture 300 is time-division CDMA (TD-CDMA). TD-CDMA allows multiple simultaneous transmissions to occur in a single time slot within a given region. Architecture 300 includes provisions for the channel access mechanism to operate under conditions of random access mode 308 and contention-free access mode 310 within a single wideband. Moreover, by spreading the multiple transmissions over a single, larger bandwidth, network capacity is increased while still retaining a secure exchange of information between nodes in a MANET.

Architecture 300 includes code-axis 302, frequency-axis 304, and time-axis 306. Code-axis 302 indicates that one or more nodes of network 100 employ a direct-sequence CDMA technique. Frequency-axis 304 indicates that the one or more nodes of network 100 transmit and receive data packets using a single wide-band channel, meaning that so additional channels besides the single wide-band channel are utilized. Time-axis 306 indicates that the one or more nodes of network 100 access a physical medium in a time-division manner by alternating between random access mode 308 and contention-free access mode 310 synchronously. While in contention-free access mode 310, time is further divided into frames $312_{A1}$ to $312_{F1}$. Each of frames $312_{A1}$ to $312_{F1}$ consist of control (CTRL) slot 314, data (DATA) slot 316, and acknowledgement (ACK) slot 318. CTRL slot 314 is further divided into sub-slots, which are further described with respect to Figure 4 below. In one embodiment, a guard time (not shown) is inserted between frames $312_{A1}$ to $312_{F1}$ of contention-free access mode 310 to accommodate for propagation delays and noticeable amounts of clock drift.

The direct-sequence CDMA technique indicated by code-axis 302 offers more secure communications and higher jamming resistance (two of the most important considerations in military applications), higher spectral efficiency and better tolerance to multi-path fading, even with low signal-to-noise ratios (SNRs). In one embodiment, each node of network 100 is assigned a unique, pseudo-random signature code. Generation of the signature code is discussed below. Moreover, one or more signals transmitted simultaneously by one or more transmitting nodes in network 100 are distinguished via signal processing at a receiving node within network 100. In one embodiment, code assignment involves re-assigning the signature code periodically to reduce a probability of being deciphered by a hostile party. Moreover, at least two nodes in network 100 that are sufficiently apart from one another are assigned the same signature code, i.e., signature code re-use, to increase bandwidth efficiency. In one embodiment, a code assignment scheme is not included in architecture 300. Architecture 300 is suitable for use in conjunction with any scheme capable of ensuring that at any given time and for every node present in network 100, all single-hop, neighboring nodes are assigned distinct codes.

In one embodiment, the nodes of network 100 transmit and receive data packets with a single wide-band channel 303 on frequency-axis 304. Further, there is no central node for coordinating which channel to use at a given time. While it is possible to have a single wide-band channel for communicating data packets and several narrow-band channels for exchanging control information, e.g., power control updates, the several narrow-band channels are susceptible to intended jamming by a hostile party (undesirable in military applications). Single wide-band channel 303 eliminates the need for a separate wide-band channel for communicating data packets and the several narrow-band channels for exchanging control information.

In one embodiment, the direct-sequence CDMA technique of architecture 300 generates multiaccess interference, leading to a near/far problem. The near/far problem occurs when signals from transmitting nodes closer to a receiving node are received at a higher power level than signals from transmitting nodes farther away. Performing a method of closed-loop power control at a substantially high rate will overcome the near/far problem. Closed-loop power control requires an additional, i.e., narrow-band, feedback channel. Architecture 300 does not include any narrow-band channels (only single wide-band channel 303), and closed-loop power control is not performed. In one embodiment, to overcome the near/far problem without closed-loop power control, a conventional matched-filter detector (common in traditional CDMA cellular networks) is replaced with a decorrelating detector from the area of multiuser detection (MUD). The decorrelating detector allows network 100 to operate without the narrow-band feedback channel and cope with multiaccess interference.

In one embodiment, the decorrelating detector enlarges a region of signal detection. Moreover, enlarging the region of signal detection allows for a substantially larger amount of power control error. Within the remainder of this description, the term "region of signal detection" corresponds to a "region of signal-to-noise ratios of all transmitting nodes, within which the bit-error rates of all transmitting nodes are no worse than a desired value." An enlarged region of signal detection provided by the decorrelating detector relaxes power control accuracy requirements sufficiently enough to allow network 100 to operate successfully without the narrow-band feedback channel . The decorrelating detector of network 100 is illustrated in Equation 1 below.

$$\underline{\text{Equation 1}} \qquad \hat{b}_i = \text{sgn}((\mathbf{R}^{-1}y)_i) = \text{sgn}(A_i b_i + (\mathbf{R}^{-1}\mathbf{n})_i)$$

where $i$ represents a series from 1 to M, $b_i$ represents a detected bit of a transmitted signal, A; represents a received amplitude of the transmitted signal, $R^{-1}y$ represents a decorrelating linear transformation of the transmitted signal, and $R^{-1}n$ represents enhanced noise of the transmitted signal.

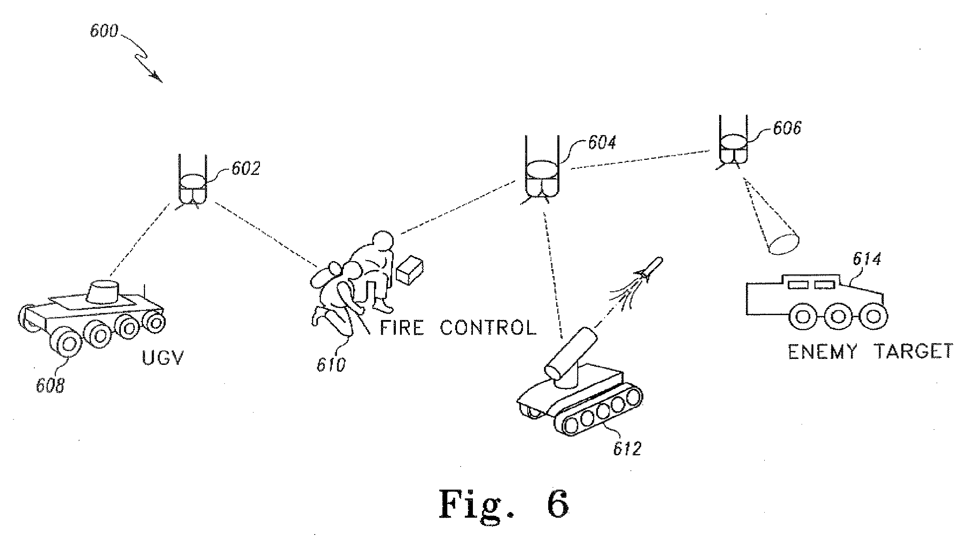

As shown with respect to Equation I above, the decorrelating detector eliminates tnuM-access interference at an expense of noise enhancement. Although noise is enhanced, enhanced noise characteristics are more predictable and are readily handled when compared to multi-access interference. This is especially true in the MANET of network 100 with significant and unpredictable node movements. The decorrelating detector described above solves the near/far problem caused by multiaccess interference and relaxes the power control accuracy requirements among the dynamic set of nodes of network 100. Additionally, the decorrelating detector is not burdened by a presence of unintended transmitter nodes. In one embodiment, network 100 incorporates the decorrelating detector as a form of coarse, open-loop power control (further described with respect to Figure 5 below).

To implement the decorrelating detector as illustrated by Equation 1 above at each node in network 100, it is necessary to invert a square matrix, the size of which equals to the number of neighboring nodes. It is also necessary to re-invert the matrix whenever there is a change in the set of neighboring nodes. In one embodiment, to reduce computational burden when the matrix size is large (and when the node is battery-powered), the decorrelating detector is replaced with an approximate decorrelating detector. The approximate decorrelating detector is illustrated in Equation 2 below.

$$\underline{\text{Equation 2}} \qquad \mathbf{R}^{-1} = \sum_{n=0}^{\infty} (\mathbf{I} - \mathbf{R})^n = \mathbf{I} + (\mathbf{I} - \mathbf{R}) + (\mathbf{I} - \mathbf{R})^2 + (\mathbf{I} - \mathbf{R})^3 + \cdots$$

where the $n^{th}$ order approximate decorrelating detector is obtained by keeping only the first n terms of the infinite series expansion,

inverting an infinite series expansion of matrices repeatedly in real time is an unnecessary computational burden for network 100. For $n \leq 3$, the number of floating-point operations required to calculate the first n terms is less than that required to invert the matrix, reducing the computational burden. In one embodiment, approximating decorrelating detectors to at least the third order provides a sufficient region of signal detection with an acceptable SNR for network 100. Moreover, this method makes CDMA suitable for use in the MANET of network 100 where secure transmissions are a priority.

In operation, the nodes of network 100 access physical layer 206 of Figure 2 in time-division manner by alternating between random access mode 308 and contention-free access mode synchronously. In random access mode 308, any neighboring nodes within network 100 are searched for and discovered, In one embodiment, random access period 308 exchanges 'hello' messages for neighboring node discovery and routing purposes; no data from an application layer (not shown) is transmitted in this mode. Exact definition of the 'hello' messages depends on a routing protocol in network layer 202, and is outside of the scope of the present application.

Contention-free access mode 310 communicates data from the application layer (not shown). In contention-free access mode 310, frames $312_{A1}$ to $312_{F1}$ are used for data transmission to the neighboring nodes discovered in random access mode 308. While in contention-free access mode 310, decisions are made regarding which node(s) of network 100 will transmit and which nodes will receive the transmission. CTRL slot 314 declares whether a node is a transmitter node, a receiver node, or neither in DATA slot 316. DATA slot 316 contains communication data to be transmitted by the one or more data packets. ACK slot 318 8 is intended for the nodes of network 100 to communicate acknowledgment packets. The acknowledgement packets indicate whether one or more data packets transmitted in DATA slot 316 were successfully received. The channel access mechanism of architecture 300 provides for multiple simultaneous transmissions since each data packet is assigned a time frame and is transmitted in synchronized, timed bursts. By transmitting data packets in the method described above, any impairment from potential jamming is reduced.

Figure 4 is a block diagram illustrating an embodiment of a control slot structure within a frame, indicated generally at 400, transmitted as part of a data packet in a MANET with a MAC protocol according to the teachings of the present invention. Structure 400 is comprised of CTRL slot 314 of Figure 3, which is further divided into an optional urge-to-transmit (URG) sub-slot 402, receiver declaration (RCV) sub-slot 404, transmitter declaration (TXT) sub-slot 406, and admission control (ADM) sub-slot 408. In one embodiment, contents of CTRL slot 314 are subsequently transmitted with each of frames $312_{A1}$ to $312_{F1}$ of Figure 3. Each element of structure 400 is discussed in further detail below.

In one embodiment, CTRL slot 314 exchanges urge-10-transrnit information between at least two neighboring nodes with optional URG sub-slot 402. The urge-to-transmit information exchanged in optional URG sub-slot 402 defines a priority ranking as described with respect to Equations 3 and 4 below. In URG sub-slot 402, at least one receiver node broadcasts an "intent to receive" based on the priority ranking. URG sub-slot 402 is intended to make the MAC protocol of architecture 300 priority-driven, improving the quality of service within network 100. Without URG sub-slot 402. i.e., without exchanging of urge-to-transmit values, the priority ranking is calculated for neighboring nodes within two hops as illustrated in Equation 3 below.

<div align="center">

Equation 3 $\quad Priority(ID_i, t_m) = Hash(ID_i \oplus t_m)$

</div>

where $ID_i$ represents the node ID of node $i$, and $t_m$ the time of sub-slot m. The Hash function used in Equation 3 provides the ability to map a unique key to each transmitting node to provide an even distribution of a smaller set of nodes at time $t_m$.

Once the priority is established, the priority values of neighboring nodes, e.g., within two hops, are sorted as illustrated in Equation 4 below.

<div align="center">

Equation 4 $\quad Prio_K = Prio(ID_i, t_m)$

</div>

where nodes with rankings $\leq$ K are allowed to transmit at time $t_m$
and $Prio_J \geq Prio_2 \geq ... Prio_L$.

The ranking mechanism illustrated above allows only K simultaneous transmissions at time $I_m$ where K is a system parameter. The priority ranking generated as illustrated with respect to Equations 3 and 4 above is the unique, pseudo-random signature code discussed earlier. All intended receivers of the transmission are given a random ranking for transmission at time $I_m$. All intended receivers out of $L$ nodes will receive the transmission in successive order.

In one embodiment, CTRL slot 314 decides which intended receiver node receives the current data transmission and propagates channel gain information to intended transmitting node(s). RCV sub-slot 404 is intended for one or more nodes of network 100 to declare their intention as receiver nodes, i.e., the one or more nodes intend 10 be a receiver in DATA slot 316. In this embodiment, urge-to transmit values obtained by optional URG sub-slot 454 or the pseudo-random number generated as described with respect to Equation 3 above define a priority ranking. Since equal or less than $K$ transmitters are allowed to send packets at time $t_m$, there are no more than K intended receivers. Based on the priority ranking mechanism (or urge-to-transmit values), top K ranking nodes declare themselves as mended receivers.

TXT sub-slot 406 is intended for each of the one or more nodes to decide and broadcast whether each of the one or more nodes intend to be a transmitter node in DATA slot 316. TXT sub-slot 406 is further intended to indicate which receiver node each of the one or more nodes of network 100 wants to transmit to. In TXT sub-slot 406, intended transmitter nodes also propagate a power level that will be used for data transmission in DATA slot 316. ADM sub-slot 408 is intended for one or more receiver nodes to decide and broadcast which of the one or more transmitter nodes to admit or reject. When no neighboring receiver node rejects an intended transmitter node, the intended transmitter node transmits a data packet in DATA slot 316 as described above with respect to Figure 3. To avoid power saturation from both intended and unintended transmitter nodes, every receiver node performs admission control for all possible transmitters, i.e., unintended and intended transmitter nodes.

With ADM sub-slot 408, the control of concurrent transmissions in architecture 300 is accomplished by limiting the number of transmissions to K nodes within the MANET out of a possible L nodes to avoid any receiver power saturation problems. In one embodiment, the value of K represents the admissible number of concurrent transmissions. The value of $K$ is determined by an average number of neighboring nodes and the power saturation point.

Figure 5 is an illustration of an embodiment of power and admission control within a MANET, indicated generally at 500, with a MAC protocol according to the teachings of the present invention. Network 500 is comprised of transmitter node 502, receiver node 504, and unintended node 506. Each node incorporates the channel access mechanism of architecture 300 in Figure 3, including control slot structure 400 of Figure 4. The elements of network 500 are discussed in further detail below. It is noted that for simplicity in description, a single transmit node 502. a single receive node 504, and a single unintended node 506 are shown in Figure 5, However, it is understood that network 500 supports any appropriate number of transmit nodes, receive nodes, or unintended nodes, e.g., one or more transmit nodes, receive nodes, or unintended nodes, in a single MANET. Network 500 illustrates a form of open loop power control. In one embodiment, receiver channel 508 and transmitter channel 510 between transmitter node 502 and receiver node 504 are assumed to be symmetrical with respect to the amount of power required to achieve a desirable SNR.

In operation, receiver node 504 instructs receiver channel 508 to acquire a channel gain value between transmitter node 502 and receiver node 504. Once the channel gain value is known, transmitter node 502 is able to calculate a necessary level of transmission power. Transmitter node 502 broadcasts a message on transmitter channel 510 within an assigned time slot to all neighboring nodes within network 500, including receiver node 504 and unintended node 506. In one embodiment, unintended node 506 does not want to transmit the message to receiver node 504. Instead, unintended node 506 attempts to transmit the message to another receiver node, e.g, another receiver node within network 500, during the assigned time slot. This unintended transmission will create an interference with receiver node 504. To prevent this, receiver node 504 performs the admission control technique described above for transmitter node 502, taking into account all available transmit nodes within network 500, including unintended node 506, to avoid any possible power saturation problems.

Once the admission control is completed, receiver node 504 broadcasts an admission result to transmitter node 502 on receiver channel 508 and unintended node 506 on unintended receiver channel 512 to indicate whether the message is accepted or rejected. In one embodiment, if transmitter node 502 receives a rejection from receiver node 504, transmitter node 502 will not transmit the at least one message during the assigned time slot. Transmitter node 502 waits for a next available time slot before transmitting again in order to avoid power saturation in one or more neighboring receiver nodes within network 500. By coordinating the receiving and transmission of one or more data packets based on priority information that is acquired through optional URG sub-slot 402 of Figure 4, and by avoiding receiver saturation based on admission control of both intended and unintended transmitter nodes, quality of service is improved in network 500.

Figure 6 is an illustration of an embodiment of a combat support system, indicated generally at 600, incorporating a MANET with a MAC protocol according to the teachings of the present invention. The MANET of system 600 is used to link various devices that are included in the system. In one embodiment network 100 of Figure 1 is implemented as a part of system 600. A first unmanned air vehicle 606, e.g., an organic air vehicle, monitors an enemy target 614, In one embodiment, first unmanned air vehicle 606 delivers real-time surveillance data. e.g., streaming video, to a fire control terminal 610 operated by one or more soldiers. Moreover, the surveillance data from first unmanned air vehicle 606 is routed to fire control terminal 610 via a second unmanned air vehicle 604.

In one embodiment, fire control terminal 610 is used to control a weapon 612, e.g., to fire weapon 612 at enemy target 614, and an unmanned ground vehicle 608, e.g., to drive unmanned ground vehicle 608 to a location in proximity to enemy target 614. Such control information is time-critical. Control information from fire control terminal 610 is routed to weapon 612 via second unmanned air vehicle 604. Control information from fire control terminal 610 is routed to the unmanned ground vehicle 608 via a third unmanned air vehicle 602.

In one embodiment, first unmanned air vehicle 606, weapon 612, and unmanned ground vehicle 608 supply high-speed, real-time data to second and third unmanned air vehicles 604 and 602 and, ultimately, to fire control terminal 610. While the presence of nodes will be easily detected, the actual interception and geographic location of individual nodes is complicated by multiple, simultaneous transmissions using network 100 to effectively conceal communication between the various devices included in system 600.

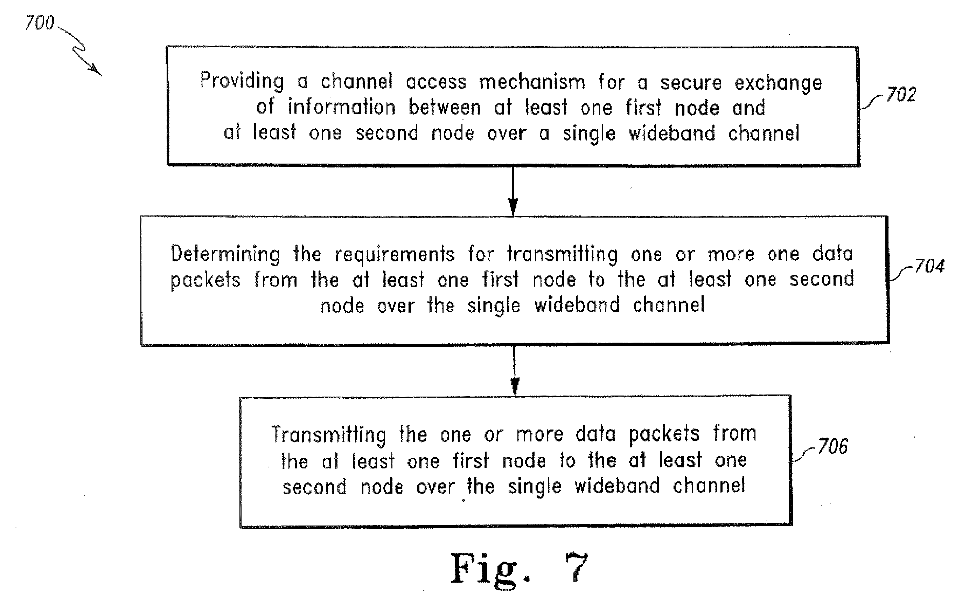

Figure 7 is a flow diagram 700 illustrating an embodiment of a method according to the teachings of the present invention of communicating in a MANET using time-division CDMA and multiuser detection. The method of Figure 7 begins at block 702. Once a communication signal is ready to be transmitted, the process of transferring wireless communication data within an arbitrary network topology begins. The method of Figure 7 is designed to allow multiple simultaneous communication transmissions to occur while coping with multiaccess interference and receiver saturation.

At block 702, the method begins by providing a channel access mechanism for a secure exchange of information between at least one first node and at least one second node over a single wideband channel, and the method proceeds to block 704. In one embodiment, the arbitrary network topology is a MANET. In one embodiment, the channel access mechanism is time-division CDMA, At block 704, the method begins determining the requirements for transmitting one or more data packets from the at least one first node to the at least one second node over the single wideband channel, and the method proceeds to block 706. In one embodiment, determining the requirements includes sufficiently relaxing power control accuracy requirements by enlarging a region of signal detection,

Before the method continues to block 706. a number of simultaneous transmissions will be controlled up to system parameter K based on the ranking mechanism as illustrated with respect to Equation 3 above, This ranking mechanism further includes calculating at least one priority value for at least one neighbor node within at least one hop of the at least one second node, sorting the at least one priority value, and selecting at least one node with the highest priority to receive the at least one data packet. In one embodiment, the at least one priority value is a pseudo-random value when optional URG sub-slot 402 of Figure 4 is not used. When urge-to-transmit values are exchanged in URG sub-slot 402, a priority value is determined by the urge-to-transmit values.

At block 706, the method begins transmitting one or more data packets from the at least one first node to the at least one second node over the single wideband channel. Transmitting the one or more data packets from the at least one first node to the at least one second node over the single wideband channel involves determining a number of neighboring nodes. In one embodiment, this includes determining a number of neighboring nodes during a period of random access. The method in block 706 further involves calculating at least one priority value for at least one neighbor node within at least one hop of the at least one second node and sorting the at least one priority value. The at least one node with the highest priority is selected to receive the one or more data packets and a power saturation point is determined above which transmission of the one or more data packets would cease. The method concludes by allowing more than one concurrent transmission of data packets within a single time slot. In one embodiment, allowing the more than one concurrent transmission of data packets within the single time slot occurs during a period of contention-free access.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the following claims and the equivalents thereof.

**Claims**

1.  A framework (200) for wireless network applications (600), the framework comprising:

    a physical layer (206) responsive to one or more operations from one or more wireless network applications (600);
    a data link layer (204) responsive to one or more operations from one or both of the one or more wireless network applications (600) and the physical layer (206), the data link layer (204) further having a channel access mechanism (300) within a media access control sub-layer (205); and
    a network layer (202) responsive to one or more function calls from one or more of the data link layer (204), the one or more wireless network applications (600) and the physical layer (206), wherein the channel access mechanism (300) in the data link layer (204) is adapted to provide random (308) and contention-free (310) access that allows secure communication transmissions while coping with multiaccess interference and receiver saturation within a single wideband channel (303).

2.  The framework (200) of claim 1, wherein the channel access mechanism (300) further comprises time-division CDMA.

3.  The framework (200) of claim 1, wherein the channel access mechanism (300) further comprises one or more frames (e,g., $312_{A1}$, .., $312_{F1}$), each of the one or more frames (e.g., $312_{A1}$, .., $312_{F1}$) containing a control slot (314), a data slot (316), and an acknowledgement slot (318).

4.  The framework (200) of claim 3, wherein the control slot (314) further comprises:

    an urge-to-transmit slot (402) adapted to exchange a priority ranking between at least two neighboring nodes (e.g., 502, 504);
    a receiver declaration slot (404) intended for each of one or more nodes (e.g., 502, .. , 506) to broadcast a decision of whether each of the one or more nodes (e.g., 502, 506)
    a transmitter declaration slot (406) intended for each of the one or more nodes (e.g., 502, .., 506) to decide and broadcast whether each of the one or more nodes (e.g., 502, .., 506) intend to be a transmitter node (502) in the data slot (316) and which receiver node (504) each of the one or more nodes (e.g., 502, .., 506) want to transmit to; and
    an admission control slot (408) intended for one or more receiver nodes (e.g., 504, 506) to decide and broadcast which of the one or more transmitter nodes (e.g., 502, 506) to admit or reject.

5.  The control slot (314) of claim 4, wherein the urge-to-transmit slot (402) is optional.

6.  The framework (200) of claim 1, wherein random access (308) further comprises determining the existence of at least one neighboring node (506).

7. The framework (200) of claim 1, wherein contention-free access (310) further comprises transmitting one or more data packets concurrency within a single time slot.

8. The framework (200) of claim 1, wherein coping with multiaccess interference further comprises enlarging a region of signal detection (100).

9. The framework (200) of claim 8, wherein enlarging a region of signal detection (100) further comprises incorporating an approximate decorrelating detector.

10. The framework (200) of claim 1, wherein coping with receiver power saturation further comprises providing admission control (500) that decider which neighboring transmitters (e.g., 502,.., 506) are permitted to transmit based on a received signal power.

Fig. 1

**Fig. 2**

Fig. 3

400

314

CRTL

| URG | RCV | TXT | ADM |

402    404    406    408

**Fig. 4**

500

502    508    504

T    R

510

512

506    U

**Fig. 5**

EP 1 814 351 A2

Fig. 6

EP 1 814 351 A2

Providing a channel access mechanism for a secure exchange
of information between at least one first node and
at least one second node over a single wideband channel

— 702

Determining the requirements for transmitting one or more one data
packets from the at least one first node to the at least one second
node over the single wideband channel

— 704

Transmitting the one or more data packets from
the at least one first node to the at least one
second node over the single wideband channel

— 706

## Fig. 7

EP 1 814 351 A2